# EUROPÄISCHE PATENTSCHRIFT

(11) **EP 1 864 829 B1**
(45) Veröffentlichungstag und Bekanntmachung des Hinweises auf die Patenterteilung: **28.01.2015**
(21) Anmeldenummer: 07116602.9
(22) Anmeldetag: 13.08.2001
(51) Int. Cl.: B60C 11/00, B60C 15/02, B60C 15/06, B60C 11/18, B60C 3/06

(54) **Fahrzeugluftreifen**
Pneumatic vehicle tire
Bandage pneumatique pour véhicule

(30) Priorität: 28.08.2000 DE 10042241
(43) Veröffentlichungstag der Anmeldung: 12.12.2007
(62) Teilanmeldung aus: 01119459.4
(73) Patentinhaber: Goodyear Dunlop Tires Germany GmbH, 63450 Hanau (DE)
(72) Erfinder: Gerresheim, Manfred, D-63179, Obertshausen (DE); Riehl, Klaus, D-63584, Gründau (DE); Miyabe, Saburo, D-63457, Grossauheim (DE); Winter, Hans-Joachim, 63571 Gelnhausen (DE)
(74) Vertreter: Kutsch, Bernd

(56) Entgegenhaltungen:
- EP-A- 0 864 446
- EP-A2- 0 311 403
- DE-A1- 1 680 458
- DE-A1- 3 720 788
- FR-A- 1 483 979
- GB-A- 1 115 834
- GB-A- 1 583 487
- JP-A- S5 981 207
- JP-A- S6 374 704
- NL-A- 6 603 353
- US-A- 2 868 261

## Beschreibung

Die Erfindung betrifft einen Fahrzeugreifen mit zumindest einer sich zwischen Wulstbereichen erstreckenden Karkassiage, einem Laufflächenbereich und einer zwischen der Karkasse und dem Laufflächenbereich gelegenen Gürtelanordnung Fahrzeugreifen müssen hinsichtlich ihrer Performance ständig verbessert und optimiert werden, wobei häufig einander widersprechende Forderungen zu berücksichtigen sind und Leistungsprofile erfüllt werden müssen, die durch den speziellen Einsatzzweck des Reifens individuell vorgegenben werden.

US-A- 2,868,261 zeigt einen asymmetrischen Fahrzeugreifen bei dem sich die Wulstkerne auf der einen Seite auf einer unterschiedlichen radialen Höhe befinden als die Wulstkerne auf der anderen Reifenseite.

EP-A2- 0 311 403 zeigt einen Reifen gemäß dem Oberbegriff des Anspruches 1. Aufgabe der Erfindung ist es, Möglichkeiten für die individuelle Gestaltung und Vorgabe von Eigenschaften von Fahrzeugreifen aufzugreifen, die sowohl einzeln als auch in Kombination eingesetzt werden können.

Zur Lösung dieser Aufgabe ist gemäß Anspruch 1 vorgesehen, dass in den Wulstbereichen reifenninnen- und reifenaußenseitig Kernreiter unterschiedlicher Höhe angeordnet werden

Der Laufflächenbereich besteht aus zumindest zwei unterschiedlichen und gegenseitig in vorgebbarer Weise abgrenzbaren Mischungskomponenten, wobei im Falle zweier Komponenten diese asymmetrisch über die Lauffläche verteilt sein können und die reifeninnenseitig gelegene Komponente aus einer hinsichtlich Verschleißfestigkeit und Rollwiderstand optimierten Mischung und die

reinfenaußenseitig gelegene Komponente aus einer hinsichtlich des Griffs optimierten Mischung bestehen kann.

Nach einer weiteren Ausgestaltungsform der Erfindung ist in einen durchgehend ausgebildeten Laufstreifen karkassenseitig eine Basisschicht vorgebbarer Dicke integriert, die aus einer Mischung mit hohem Modul besteht.

Weitere individuell oder in Kombination einsetzbare Möglichkeiten der Gestaltung eines Reifenaufbaus bestehen darin, dass in zumindest einem Wulstbereich außerhalb des jeweiligen Kernreiters ein Verstärkungsstreifen vorgesehen ist.

Durch diese Möglichkeiten lassen sich die Eigenschaften eines Fahrzeugreifens in unterschiedlichster Weise beeinflussen, so dass bei gezieltem Einsatz einer oder mehrerer der aufgezeigten Möglichkeiten die jeweilige Reifen-Performance optimiert werden kann.

Weitere vorteilhafte Ausgestaltungen der Erfindung sind in den Unteransprüchen angegeben.

Die Erfindung wird nachfolgend anhand von Ausführungsbeispielen unter Bezugnahme auf die Zeichnung erläutert; in der Zeichnung zeigt:
- Figur 1: eine schematische Darstellung einer ersten Ausführungsvariante eines Laufflächenstreifens,
- Figur 2: eine schematische Darstellung einer zweiten Ausführungsform eines Laufflächenstreifens,
- Figur 3: eine schematische Darstellung einer vorteilhaften Wulstbereichsgestaltung in einem Reifenaufbau, und
- Figur 4: eine schematische Darstellung einer erfindungsgemäßen Kernreitergestaltung in einem Reifenaufbau.

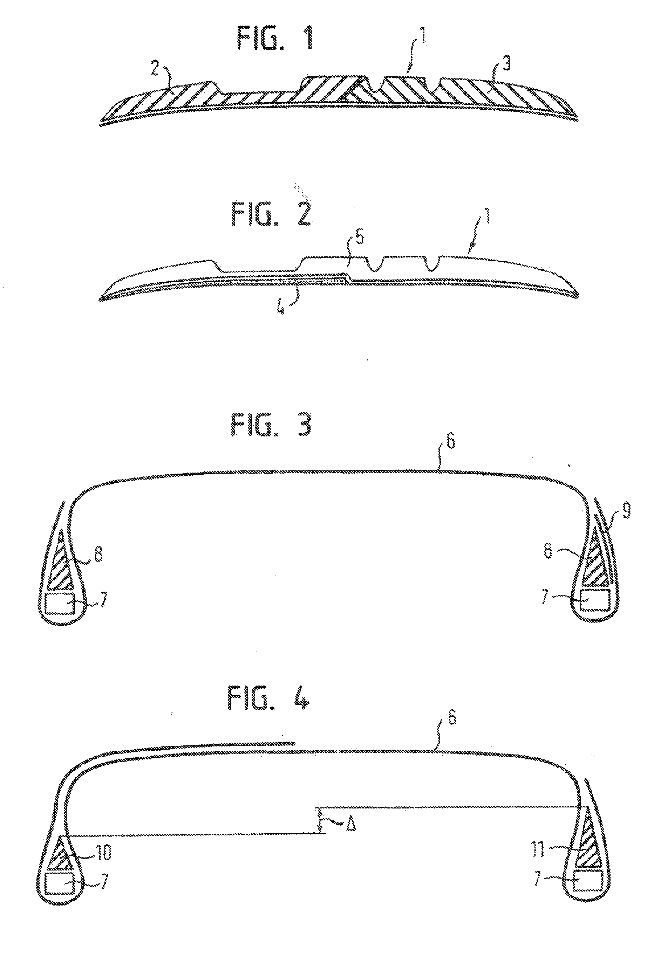

Figur 1 zeigt einen Laufflächenstreifen 1 für einen Reifenaufbau, der aus zwei unterschiedlichen Komponenten 2, 3 besteht, d.h. es sind zwei unterschiedliche Eigenschaften aufweisende Mischungskomponenten verwendet.

Auf diese Weise kann beispielsweise auf der Reifeninnenseite, wo in dem gezeigten Ausführungsbeispiel eine besonders breite Rille vorgesehen ist, eine hinsichtlich der Verschleißfestigkeit und des Rollwiderstandes optimierte Mischung und an der Außenseite eine hinsichtlich des Griffs bzw. der Haftung optimierte Mischung verwendet werden. Die Eigenschaften des mit einer derartigen Lauffläche ausgestatteten Reifens können dabei sowohl durch die Wahl der jeweiligen Komponenten 2, 3 als auch durch die Positionierung der Trennebene zwischen den beiden Komponenten 2, 3 entsprechend den jeweiligen Forderungen beeinflußt werden. Insbesondere ist hier auch eine asymmetrische Gestaltung möglich.

Figur 2 zeigt eine Variante einer Laufflächengestaltung, die sich dadurch auszeichnet, dass unterhalb des durchgehend ausgeführten Laufflächenstreifens 5 in einem Teilbereich der Breite des Laufstreifens, nämlich im dargestellten Fall im Bereich der Innenseite des Reifens, eine Basisschicht 4 vorgesehen ist, die aus einer Mischung von hohem Modul besteht. Diese asymmetrische Ausgestaltung einer Lauffläche ermöglicht eine wesentliche Verbesserung des Rollwiderstandes. Variiert werden kann dabei die formmäßig in den Laufflächenstreifen integrierte Basisschicht sowohl hinsichtlich ihrer materialbedingten Eigenschaften als auch hinsichtlich ihrer radialen Stärke und hinsichtlich ihrer axialen Erstreckung, um das jeweils gewünschte optimale Ergebnis zu erzielen.

In beiden Ausführungsvarianten kann durch Materialwahl und geometrische Gestaltung beider Komponenten auch das Durchbiegungsverhalten des Laufflächenbereichs gezielt beeinflusst werden.

Figur 3 zeigt eine schematische Darstellung einer Karkasslage 6, deren Enden jeweils einen Wulstkern 7 mit darüber angeordnetem Kernreiter umschlingen. Erfindungsgemäß ist vorgesehen, dass zumindest im Bereich eines der Kernreiter 8 ein Verstärkungsstreifen 9 vorgesehen wird. Der im Ausführungsbeispiel nach Figur 3 gezeigte, an dem außenseitig gelegenen Kernreiterbereich angeordnete Verstärkungsstreifen 9 ermöglicht es, die Handling-Eigenschaften des Reifens gezielt und merkbar zu verbessern.

Figur 4 zeigt eine weitere Möglichkeit zur Optimierung von Reifeneigenschaften, die darin besteht, auf der Reifeninnenseite und der Reifenaußenseite Kernreiter 10, 11 unterschiedlicher Höhe einzusetzen. Im dargestellten Ausführungsbeispiel ist die radiale Höhe des reifeninnenseitigen Kernreiters 10 um einen Betrag ? geringer als die radiale Höhe des reifenaußenseitig gelegenen Kernreiters 11. Dieser vergleichsweise hohe Kernreiter 11 ist besonders zur Querkraftaufnahme geeignet und ermöglicht es vor allem, das Handling des Reifens zu verbessern, während generell eine weichere Innenseite des Reifens zu einer Verbesserung des Komforts führt.

Alle vorstehend erläuterten Ausführungsbeispiele gestatten es sowohl für sich allein als auch in Kombination, die Reifen-Performance zu verbessern, und zwar unabhängig von der jeweiligen Profilgestaltung.

Wenn im Zusammenhang mit der Optimierung eines Reifens eine bestmögliche Gewichtsersparnis gefordert wird, dann kann der bei Reifen übliche und bekannte Felgenschutz auf der Innenseite eingespart und nur an der Reifenaußenseite vorgesehen werden, um angestrebte Gewichts- und Kostenreduzierungen zu realisieren.

## Patentansprüche

1. Fahrzeugreifen mit zumindest einer sich zwischen Wulstbereichen erstreckenden Karkasslage, einem Laufflächenbereich und einer zwischen der Karkasse und dem Laufflächenbereich gelegenen Gürtelanordnung, wobei in den Wulstbereichen reifeninnen- und reifenaußenseitig Kernreiter (10, 11) unterschiedlicher Höhe angeordnet sind, und wobei der reifeninnenseitig gelegene Kernreiter (10) eine geringere Höhe als der reifenaußenseitig gelegene Kernreiter (11) besitzt, **dadurch gekennzeichnet, dass** der Laufflächenbereich (1) aus zumindest zwei unterschiedlichen und gegenseitig in vorgebbarer Weise abgrenzbaren Mischungskomponenten (2, 3) besteht.

2. Reifen nach Anspruch 1, **dadurch gekennzeichnet, dass** die reifeninnenseitig gelegene Komponente (2) aus einer hinsichtlich Verschleißfestigkeit und Rollwiderstand optimierten Mischung und die reifenaußenseitig gelegene Komponente (3) aus einer hinsichtlich des Griffs optimierten Mischung besteht.

3. Reifen nach Anspruch 1 oder 2, **dadurch gekennzeichnet, dass** die beiden Komponenten (2, 3) über die Laufflächenbreite asymmetrisch verteilt sind.

4. Reifen nach einem der vorhergehenden Ansprüche 1 bis 3, **dadurch gekennzeichnet, dass** der Übergang zwischen den Komponenten (2, 3) überlappend ausgeführt ist.

5. Reifen nach einem der vorangehenden Ansprüche, wobei in zumindest einem Wulstbereich axial außerhalb des jeweiligen Kernreiters (8) ein Verstärkungsstreifen (9) vorgesehen ist.

6. Reifen nach Anspruch 5, **dadurch gekennzeichnet, dass** der Verstärkungsstreifen (9) zwischen dem jeweiligen Kernreiter (8) und dem Umschlagende der Karkasse (6) angeordnet ist.

7. Reifen nach Anspruch 1, **dadurch gekennzeichnet, dass** die Karkasslage (6) mit ihren Enden reifeninnenseitig und reifenaußenseitig den Wulstkern (7) mit dem darüber angeordneten Kernreiter (10, 11) umschlingt, wobei sich der umgeschlagene Teil der Karkassenlage (6) auf der Reifeninnenseite bis in den Laufflächenbereich erstreckt.

## Claims

1. A vehicle tire having at least one carcass ply extending between bead portions, a tread portion, and a belt arrangement located between the carcass and the tread portion, wherein fillers (10, 11) of different heights are arranged in the bead portions on the inward-facing side of the tire and on the outward-facing side of the tire; and wherein the filler (10) located on the inward-facing side of the tire has a smaller height than the filler (11) located on the outward-facing side of the tire, **characterized in that** the tread portion (1) consists of at least two compound components (2, 3) which are different and are mutually distinguishable in a predeterminable manner.

2. The tire of claim 1, **characterized in that** the component (2) located on the inward-facing side of the tire consists of a compound which is optimized in respect to wear resistance and rolling resistance, and the component (3) located on the outward-facing side of the tire consists of a compound which is optimized in respect to grip.

3. The tire of claim 1 or 2, **characterized in that** the two components (2, 3) are distributed asymmetrically over the tread width.

4. The tire of any of the preceding claims 1 to 3, **characterized in that** the transition between the components (2, 3) is made overlapping.

5. The tire of any of the preceding claims, wherein in at least one bead portion a reinforcement strip (9) is provided axially external to the respective filler (8).

6. The tire of claim 5, **characterized in that** the reinforcement strip (9) is disposed between the respective filler (8) and the turnup end of the carcass (6).

7. The tire of claim 1, **characterized in that** on the inward-facing side of the tire and on the outward-facing side of the tire, the carcass ply (6) is wrapped with its ends around the bead core (7) and the filler (10, 11) arranged there above, wherein on the inward-facing side of the tire the turned-up portion of the carcass ply (6) extends into the tread portion.

## Revendications

1. Bandage pneumatique pour véhicule automobile comprenant au moins une couche de carcasse qui s'étend entre des zones de talons, une zone de bande de roulement et un agencement de ceintures disposé entre la carcasse et la zone de bande de roulement, dans lequel, dans les zones de talons, sont disposés des bandelettes talons de hauteur différente (10, 11) à l'intérieur et à l'extérieur du bandage pneumatique, et dans lequel la bandelette talon (10) qui est disposée à l'intérieur du bandage pneumatique possède une hauteur inférieure à celle de la bandelette talon (11) disposée à l'extérieur du bandage pneumatique, **caractérisé en ce que** la zone de bande de roulement (1) est constituée par au moins deux composants de mélange (2, 3) différents et qui peuvent être délimités l'un par rapport à l'autre d'une manière prédéfinie.

2. Bandage pneumatique selon la revendication 1, **caractérisé en ce que** le composant (2) disposé à l'intérieur de bandage pneumatique est constitué par un mélange optimisé en ce qui concerne sa résistance à l'usure et sa résistance au roulement et le composant (3) disposé à l'extérieur du bandage pneumatique est constitué d'un mélange optimisé en ce qui concerne son adhérence.

3. Bandage pneumatique selon la revendication 1 ou 2, **caractérisé en ce que** les deux composants sont répartis d'une manière asymétrique sur la largeur de la bande de roulement.

4. Bandage pneumatique selon l'une quelconque des revendications précédentes 1 à 3, **caractérisé en ce que** la transition entre les composants (2, 3) est réalisée pour être chevauchante.

5. Bandage pneumatique selon l'une quelconque des revendications précédentes, dans lequel, dans au moins une zone de talon, en direction axiale à l'extérieur de la bandelette talon respective (8), on prévoit une bande de renforcement.

6. Bandage pneumatique selon la revendication 5, **caractérisé en ce que** la bande de renforcement (9) est disposée entre la bandelette talon respective (8) et l'extrémité de retournement de la carcasse (6).

7. Bandage pneumatique selon la revendication 1, **caractérisé en ce que** la couche de carcasse (6) entoure, avec ses extrémités, à l'intérieur du bandage pneumatique et à l'extérieur du bandage pneumatique, la tringle de talon (7) avec la bandelette talon (10, 11) disposée par-dessus, dans lequel la partie retournée de la couche de carcasse (6) s'étend sur le côté interne du bandage pneumatique jusqu'à la zone de bande de roulement.
